# EUROPÄISCHE PATENTANMELDUNG

(11) **EP 0 818 746 A2**
(43) Veröffentlichungstag der Anmeldung: **14.01.1998**
(21) Anmeldenummer: 97110610.9
(22) Anmeldetag: 28.06.1997
(51) Int. Cl.: G06F 17/60

(54) **Anordnung eines Integrationssystems und Verfahren zur Verwaltung von Finanzdienstleistungen zur Einbindung von Bankfilialen in Netzwerke**

(30) Priorität: 11.07.1996 DE 19628044
(71) Anmelder: Esd Information Technology Entwicklungs GmbH, 04430 Dölzig (DE)
(72) Erfinder: Bugovics, Jozsef, 06886 Lutherstadt Wittenberg (DE)
(74) Vertreter: Haussingen, Peter

(57) **Zusammenfassung**

Die Erfindung betrifft eine Anordnung eines Integrationssystems und ein Verfahren zur Verwaltung von Finanzdienstleistungen zur Einbindung von Bankfilialen in Netzwerke. Die Aufgabe besteht darin, den gesamten sicherheitsrelevanten Datenfluß in einer geschlossenen Umgebung abzuwickeln, wobei die Erfindung nicht auf spezielle Netze und/oder Bankfilialen beschränkt bleiben und der direkte Kontakt zwischen dem Kunden und der Bankfiliale unterstützt werden soll. Erfindungsgemäß wird die Aufgabe gelöst, indem eine spezielle Anordnung von Einzelkomponenten im Integrationssystem besteht. Jede Bankfiliale/ Finanzdienstleister (3) ist mit ihrer spezifischen Bank EDV (4) über das Bank-Netzwerk-Integrationssystem (2) über ein/mehrere Netzwerke (5) mit dem Kunden-Netzwerk-Integrationssystem (2) des Kunden (6) verbunden. Das Bank-Netzwerk-Integrationssystem (1) ist zwischen der Bank EDV (4) und dem Netzwerk (5) angeordnet. Das Kunden-Netzwerk-Integrationssystem (2) besteht aus einem PC (14) welcher mit einem speziellen Identifizierungs- und Verschlüsselungsmodul (16) verbunden ist. Das Bank-Netzwerk-Integrationssystem (1) verbindet die spezifische Bank-EDV (4) über den Kummunikationsserver (7) und den speziellen Firewall (8) mit dem Netzwerk (5).

## Beschreibung

Die Erfindung betrifft eine Anordnung eines Integrationssystems und ein Verfahren zur Verwaltung von Finanzdienstleistungen zur Einbindung von Bankfilialen in Netzwerke mit der eine zeit- und kostensparende Variante des persönlichen Zahlungsverkehrs geboten wird. Zur Unterstützung einer zeit- und kostensparenden Variante des persönlichen Zahlungsverkehrs bieten eine Vielzahl von Bankfilialen/ Finanzdienstleistern die Möglichkeit, wesentliche Prozesse des Zahlungsverkehrs von außerhalb über Telefon, Bildschirmtext oder PC auszuführen. Dabei werden auf Grund der bankspezifischen EDV-Systeme einzelner Bankfilialen jeweils spezielle Hard- und Softwarekomponenten an den Kunden ausgegeben, mittels welcher das Homebanking ermöglicht wird. Vielfach ist dadurch das Homebanking auf die jeweils zugehörige Bankfiliale beschränkt, so daß nicht parallel mit verschiedenen Bankfilialen oder Finanzdienstleistern kommuniziert werden kann. Eine Erweiterung des Homebanking auf systemfremde Bankfilialen/Finanzdienstleister ist mit einer entsprechenden Anpassung der jeweiligen spezifischen Bank EDV verbunden, wodurch hohe Kosten seitens dieser Bankfilialen/Finanzdiestleister entstehen. Einem einheitlichen bankübergreifenden Homebankingsystem wird durch diese Problematik nicht gedient. Spezielle Netzdienste z.B. T-Online bieten eine einheitliche Schnittstelle zu unterschiedlichen Bankfilialen, gestatten jedoch keine identividuelle Repräsentation der Bankfiliale oder des Finanzdienstleisters. Eine individuelle Online-Betreuung des Kunden ist somit nicht gegeben. Die Kommunikation zwischen dem Kunden und der Bankfiliale wird meist über Verschlüsselungsalgorithmen z.B. RSA oder DES vorgenommen. Durch die Nutzung allgemein zugänglicher unsicherer Netzwerke, z.B. dem Internet besteht jedoch stets die Gefahr einer Manipulation durch Dritte. Bei entsprechendem softwarebasierenden Schutz benutzen alle Teilnehmer nichtidentifizierbare Hardware. Zur Gewährleistung der Datensicherheit gibt der Kunde zu Identifikation Nutzerdaten, Seriennummern (ID) sowie private Schlüssel (PK) und Paßwörter (PW) ein. Gelingt es Dritten an diese Daten (meist eine geheime IP-Nummer und/oder eine Scheckkarte mit geheimen Daten) zu gelangen, können mit vergleichbarer Hardware auf Kosten des Kunden Finanztransaktionen durchgeführt werden. Beispiele dafür sind T-Online oder Secure Elektronic Transaction (SET) von VISA und Mastercard. Beim hardwarebasierenden Schutz werden alle für eine Identifizierung benötigten Daten in einer nicht angreifbaren geschlossen Umgebung abgelegt, welche bei der Finanztransaktion physisch anwesend sein muß. Ein Beispiel hierzu stellt die Smartcardtechnologie dar, bei welcher individuelle Chips zur Verschlüsselung eingesetzt werden, die eine Identifikation des Kunden gestatten. Damit ist eine sichere Identifikation des Kunden gewährleistet. Dennoch ist eine Manipulation der Informationsübertragung möglich, da die Verarbeitung der Daten im RAM des Rechners erfolgt. Ein ausreichender Schutz für eine Nutzung weltweiter unsicherer Netzwerke z.B. des Internet für Finanzdienstleistungen ist somit nicht gegeben.

Die Aufgabe der Erfindung ist es, daß die Nachteile des Standes der Technik beseitigt werden, daß der Stand der Technik konsequent in der Richtung einer geschlossenen Umgebung des gesamten sicherheitsrelevanten Datenflusses weiterentwickelt werden soll, wobei die Entwicklung nicht auf spezielle Netze und/oder Bankfilialen beschränkt bleiben soll und der direkte Kontakt zwischen dem Kunden und der Bankfiliale bzw. dem Finanzdienstleister unterstützt werden soll.

Erfindungsgemäß wird die Aufgabe der Erfindung durch die im Patentanspruch 1 aufgeführten Merkmale gelöst. Weiterbildungen der Erfindung ergeben sich aus den Unteransprüchen.

Die Vorteile der Erfindung liegen in der Bereitstellung eines Integrationssystems, welches sowohl dem Kunden als auch der Bankfiliale maximale Sicherheit von elektronisch übermittelten Inhalten gewährleistet. Diese Erfindung ist unabhängig von der Art des Netzes (Kabel-Netz, Funk-Netz) und von der Art des Inhaltes (Bilder, Texte, elektronische Zahlungsmittel). Der Kunde wird in die Lage versetzt, über ein beliebiges Netzwerk parallel mit verschiedenen Bankfilialen zu kommunizieren, wobei der direkte Informationsaustausch zwischen dem Kunden und der Bankfiliale erhalten bleibt. Die Bankfiliale ist direkt beim Kunden präsent und kann ihn online beraten. Durch das erfindungsgemäße Verwaltungsverfahren können Standardaufgaben bei Finanzdienstleistungen sehr einfach, übersichtlich und schnell vom Kunden vorgenommen werden. Insgesamt spart sowohl der Kunde als auch die Bankfiliale durch diese Erfindung erhebliche Zeit und Kosten ein.

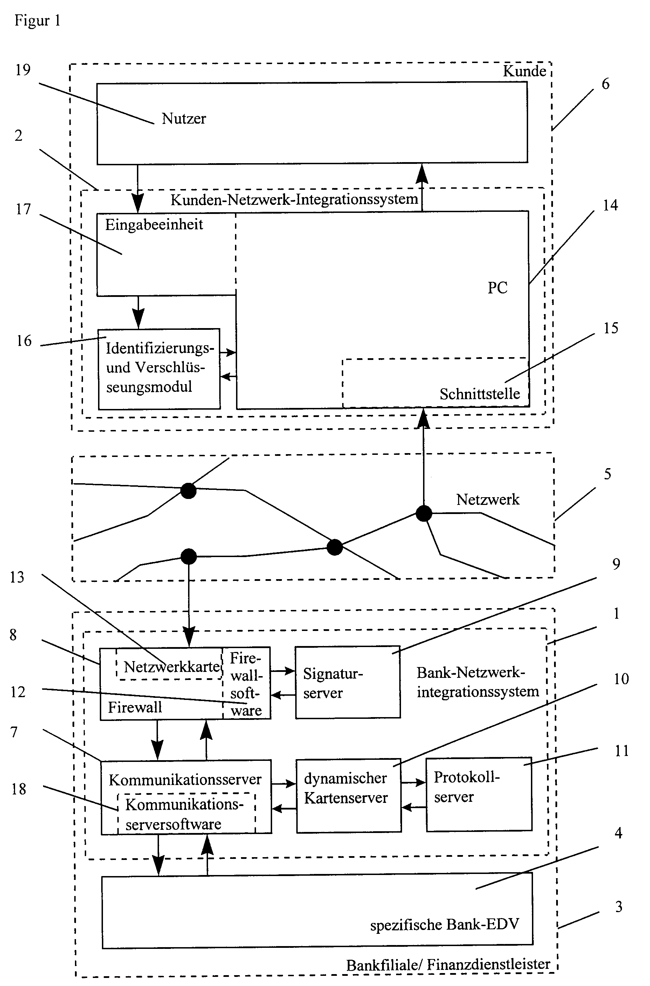

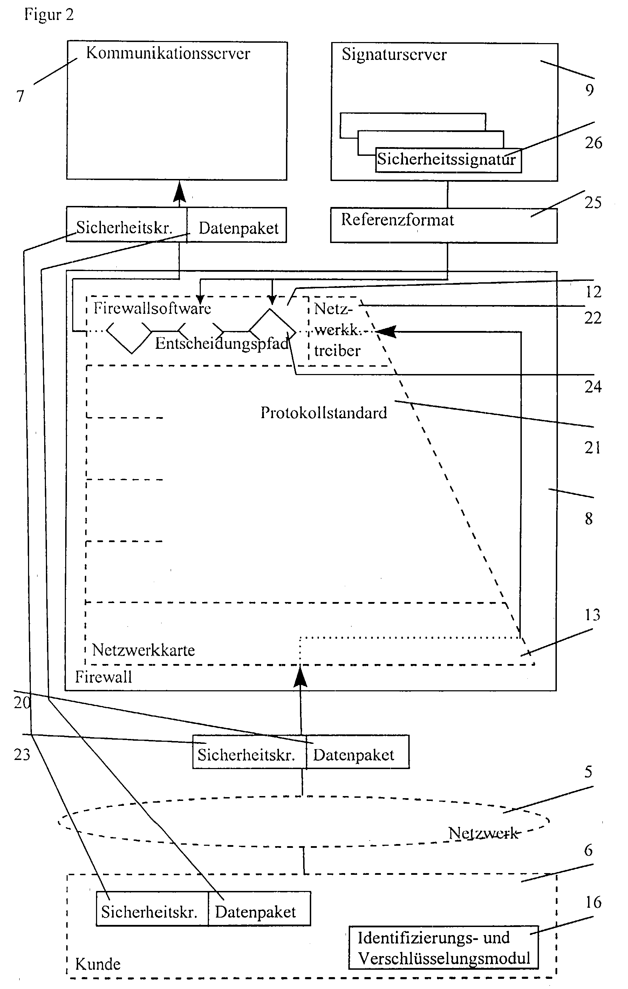

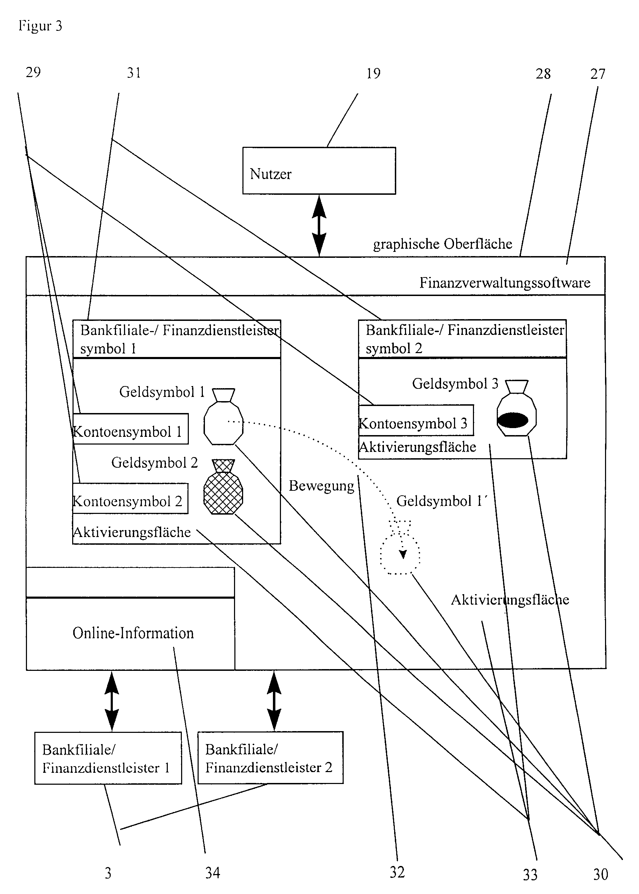

Dieses wird nachfolgend
mit Figur 1 als Integrationssystem
mit Figur 2 als Schutzsystem und
mit Figur 3 als Anwendungsbeispiel zur Verwaltung von Finanzdienstleistungen dargestellt.

Nach Figur 1 besteht das Integrationssystem aus einer speziellen Anordnung von Einzelkomponenten in einem Bank-Netzwerk-Integrationssystem 1 und in einem Kunden-Netzwerk-Integrationssystem 2. Jede Bankfiliale/ Finanzdienstleister 3 ist mit ihrer spezifischen Bank EDV 4 über das Bank-Netzwerk-Integrationssystem 2 über ein/mehrere Netzwerke 5 mit dem Kunden-Netzwerk-Integrationssystem 2 des Kunden 6 verbunden. Das Bank-Netzwerk-Integrationssystem 1 ist zwischen der Bank EDV 4 und dem Netzwerk 5 angeordnet. Über einen Kommunikationsserver 7 wird die Konvertierung der Bank EDV Protokolle und der Netzwerk Protokolle realisiert. Das Bank-Netzwerk-Integrationssystem 1 besteht erfindungsgemäß aus einer speziellen Anordnung des Kommunikationsservers 7, eines speziellen Firewalls 8, eines Signaturservers 9, eines dynamischen Kartenservers 10 und eines Protokollservers 11. Zwischen dem Kommunikationsserver 7 und dem Netzwerk 5 ist der spezielle Firewall 8 angeordnet, welcher mit dem Signaturserver 9 verbunden ist. Dadurch können nur kunden- und bankfilialspezifische Daten den speziellen Firewall 8 passieren. Dies wird erfindungsgemäß durch eine spezielle Firewallsoftware 12 gelöst, die unter Umgehung weiterer Softwareschnittstellen direkt auf eine Netzwerkkarte 13 zugreift. Der Kommunikationsserver 7 übernimmt seitens der Bankfiliale/ Finanzdienstleister 3 die Ent- und Verschlüsselung der Daten und ist erfindungsgemäß mit dem dynamischen Kartenserver 10 verbunden, der die Bearbeitung und Speicherung der kundenspezifischen Grunddaten, die Berechnung der translationsrelevanten Schlüssel und die Speicherung der sicherheitsrelevanten bankspezifischen Schlüsselfelder übernimmt. Der dynamische Kartenserver 10 ist erfindungsgemäß mit dem Protokollserver 11 verbunden, welcher alle Vorgänge protokolliert, so daß Fehlfunktionen und Störungen registriert und zurückverfolgt werden können. Auf Seiten des Kunden 6 besteht das Kunden-Netzwerk-Integrationssystem 2 erfindungsgemäß aus einem PC 14, der über eine entsprechende Schnittstelle 15 mit dem Netzwerk 5 verbunden ist, wobei der PC 14 mit einem speziellen Identifizierungs- und Verschlüsselungsmodul 16 verbunden ist, welcher die Integrität des Übertragungsprotokolles kontrolliert und eine kunden- und bankfilialspezifische Ver- und Entschlüsselung der Daten seitens des Kunden 6 vornimmt. Weiterhin ist erfindungsgemäß eine Eingabeeinheit 17 des PC 14 direkt mit dem speziellen Identifizierungs- und Verschlüsselungsmodul 16 verbunden, welcher die sicherheitsrelevanten Eingabedaten direkt verarbeitet. Dadurch findet auf Seiten des Kunden 6 der sicherheitrelevante Informationsfluß von der Dateneingabe über die Eingabeeinheit 17 bis zur Verschlüsselung in dem Identifizierungs- und Verschlüsselungsmodul 16 statt, welches eindeutig identifizierbar ist. Das Integrationssystem zur Verwaltung von Finanzdienstleistungen zur Einbindung von Bankfilialen in Netzwerke emuliert erfindungsgemäß die bankspezifischen Kommandostrukturen der spezifischen Bank-EDV 4 durch eine spezielle Kommunikationsserversoftware 18 des Kommunikationsservers 7. Dadurch kann ein Nutzer 19 alle Bankfilialen durch eine einheitliche spezielle Kommandostruktur ansprechen.

Nach Figur 2 wird der Schutz vor digitalen Angriffen dadurch gewährleistet, daß alle Datenpakete 20, die aus dem Netzwerk 5 kommen, den speziellen Firewall 8 passieren müssen, indem die Firewallsoftware 12 unter Umgehung eines Protokollstandards 21, das als OSI-Protokollstandard die Verwendung von standardisierten Softwareschnittstellen vorschreibt, mittels eines speziellen Netzwerkkartentreibers 22 direkt auf eine Netzwerkkarte 13 zugreift. Die Datenpakete 20, welche bspw. dem UDP als spezielles Protokoll der TCP/IP-Familie entsprechen, sind mit einem Sicherheitskriterium 23 kombiniert. Dieses wird kundenspezifisch durch ein spezielles Verfahren beim Kunden 6 erzeugt bspw. mittels des Identifizierungs- und Verschlüsselungsmoduls 16. Die spezielle Firewallsoftware 12 läßt nur diejenigen Datenpakete 20 passieren, welche im Entscheidungspfad 24 mit fallender Priorität dem speziellen Systemformat, dem kundenspezifischen Format und weiteren Formaten entsprechen, wobei diese Referenzformate 25 vom Signaturserver 9 bereitgestellt werden, welcher die Sicherheitssignaturen 26 erzeugt und verwaltet.
Nach Figur 3 erfolgt die Verwaltung von Finanzdienstleistungen in der Weise, daß der Nutzer 19 mit einer für alle Bankfilialen/ Finanzdienstleister 3 einheitlichen speziellen Finanzverwaltungssoftware 27 mit mehreren Bankfilialen/ Finanzdienstleistern 3 kommunizieren kann. Diese spezielle Finanzverwaltungssoftware 27 ist dabei in eine graphische Oberfläche 28 integriert, welche auf verschiedenste Weise grafisch dargestellte Kontensymbole 29 bei den einzelnen Bankfilialen/ Finanzdienstleistern 3 mit ihrem Äquivalent verknüpft. Geldbeträge werden mit Hilfe eines äquivalenten grafischen Geldsymbols 30 (z.B. Geldsack) auf verschiedene Bankfilial-/ Finanzdienstleistersymbole 31 bewegt. Bei Bewegung des Geldsymbols 30 auf eine der möglichen Aktivierungsflächen 33 entstehen Überweisungssätze, die der Nutzer 19 komplettiert, um diese dann optional an die entsprechende Bankfiliale/ Finanzdienstleister 3 zu versenden. Dabei zeigt die Art der Gestaltung des Geldsymbols 30 verschiedene Zustände der äquivalenten Geldmenge z.B: mit voller Größe und Farbe: verfügbar; farblich oder grafisch verändert: verschiedenartig festgelegt; mit zusätzlichem Symbol: vorreserviert u.s.w. an. Diese Finanzverwaltungssoftware 27 ermöglicht zusätzlich eine Online-Repräsentation von zusätzlichen Online-Informationen 34 (z.B. News) der benutzten Bankfilialen/ Finanzdienstleistern 3. Die Finanzverwaltungssoftware 27 ist online updatefähig.

### Verwendete Abkürzungen

- PC: Personalcomputer
- EDV: elektronische Datenverarbeitung
- RSA: Revest-Sharmir-Adelman Verschlüsselungsalgorithmus
- DES: data encription standard
- VISA: Handelsname
- RAM: random access memory
- UDP: user datagram protokoll
- TCP/IP: transmission control protokoll/ internet protokoll
- OSI: open system interconnection

### Verwendete Bezugszeichen

- 1: Bank-Netzwerk-Integrationssystem
- 2: Kunden-Netzwerk-Integrationssystem
- 3: Bankfiliale/ Finanzdiensleister
- 4: spezifische Bank-EDV
- 5: Netzwerk
- 6: Kunde
- 7: Kommunikationsserver
- 8: Firewall
- 9: Signaturserver
- 10: dynamischer Kartenserver
- 11: Protokollserver
- 12: Firewallsoftware
- 13: Netzwerkkarte
- 14: PC
- 15: Schnittstelle
- 16: Identifizierungs- und Verschlüsselungsmodul
- 17: Eingabeeinheit
- 18: Kommunikationsserversoftware
- 19: Nutzer
- 20: Datenpakete
- 21: Protokollstandard
- 22: Netwerkkartentreiber
- 23: Sicherheitskriterium
- 24: Entscheidungspfad
- 25: Referenzformate
- 26: Sicherheitssignaturen
- 27: Finanzverwaltungssoftware
- 28: graphische Oberfläche
- 29: Kontensymbole
- 30: Geldsymbol
- 31: Bankfilial-/Finanzdienstleistersymbol
- 32: Symbolverschiebung
- 33: Aktivierungsflächen
- 34: Online-Information

## Patentansprüche

1. Anordnung eines Integrationssystems für Finanzdienstleistungen zur Einbindung von Bankfilialen in Netzwerke, indem jede Bankfiliale/ Finanzdienstleister (3) mit ihrer spezifischen Bank EDV (4) über ein Bank-Netzwerk-Integrationssystem (1) über ein/mehrere Netzwerke (5) mit dem Kunden-Netzwek-Integrationssystem (2) eines Kunden (6) verbunden sind, indem das Bank-Netzwerk-Integrationssystem (1) zwischen der Bank EDV (4) und dem Netzwerk (5) angeordnet ist welches über einen Kommunikationsserver (7) die Konvertierung der Bank EDV Protokolle und der Netzwerk Protokolle realisiert, dadurch gekennzeichnet,
daß das Bank-Netzwerk-Integrationssystem (1) aus einer speziellen Anordnung des Kommunikationsservers (7), eines speziellen Firewalls (8), eines Signaturservers (9), eines dynamischen Kartenservers (10) und eines Protokollservers (11) besteht,
daß zwischen dem Kommunikationsserver (7) und dem Netzwerk (5) der spezielle Firewall (8), welcher mit dem Signaturserver (9) verbunden ist, angeordnet ist, wodurch nur kunden- und bankfilialspezifische Daten den speziellen Firewall (8) passieren können, indem die Datenpakete (20) mit einem Sicherheitskriterium (23), welches kundenspezifisch durch ein spezielles Verfahren beim Kunden (6) erzeugt wird, kombiniert sind, indem die spezielle Firewallsoftware (12) unter Umgehung des Protokollstandards (21) mittels eines speziellen Netzwerkkartentreibers (22) direkt auf eine Netzwerkkarte (13) zugreift und nur diejenigen Datenpakete (20) passieren läßt, welche im Entscheidungspfad (24) mit fallender Priorität dem speziellen Systemformat, dem kundenspezifischen Format und weiteren Formaten entsprechen, wobei diese Referenzformate (25) vom Signaturserver (9) bereitgestellt werden, welcher die Sicherheitssignaturen (26) erzeugt und verwaltet.

2. Verfahren zur Verwaltung von Finanzdienstleistungen zur Einbindung von Bankfilialen in Netzwerke nach Anspruch 1, dadurch gekennzeichnet,
daß der Kommunikationsserver (7) die Ent- und Verschlüsselung der Datenpakete (20) seitens der Bankfiliale/ Finanzdienstleister (3) übernimmt, daß der Kommunikationsserver (7) mit dem dynamischen Kartenserver (10) verbunden ist, wobei der dynamische Kartenserver (10) die Bearbeitung und Speicherung der kundenspezifischen Grunddaten, die Berechnung der translationsrelevanten Schlüssel und die Speicherung der sicherheitsrelevanten bankspezifischen Schlüsselfelder übernimmt,
daß der dynamische Kartenserver (10) mit dem Protokollserver (11) verbunden ist, welcher alle Vorgänge protokolliert, daß der Kunde über ein spezielles Kunden-Netzwerk-Integrationssystem (2) mit dem Netzwerk (5) verbunden ist, wobei das Kunden-Netzwerk-Integrationssystem (2) aus dem PC (14) und einem speziellen Identifikations- und Verschlüsselungsmodul (16) besteht, wobei der PC (14) mit dem speziellen Identifizierungs- und Verschlüsselungsmodul (16) verbunden ist, welcher die Integrität des Übertragungsprotokolles kontrolliert und eine kunden- und bankfilialspezifische Ver- und Entschlüsselung der Daten seitens des Kunden (6) vornimmt, wobei die Eingabeeinheit (17) mit dem speziellen Identifizierungs- und Verschlüsselungsmodul (16) verbunden ist, welches sicherheitsrelevante Eingabedaten direkt verarbeitet.

3. Verfahren zur Verwaltung von Finanzdienstleistungen zur Einbindung von Bankfilialen in Netzwerke nach Anspruch 1 und Anspruch 2, dadurch gekennzeichnet,
daß die bankspezifischen Kommandostrukturen der spezifischen Bank-EDV (4) von einer speziellen Kommunikationsserversoftware (18) des Kommunikationsservers (7) emuliert werden, welche durch eine für alle Bankfiliale/ Finanzdienstleister (3) einheitliche spezielle Kommandostruktur gesteuert wird, wodurch der Nutzer (19) mit einer für alle Bankfilialen/ Finanzdienstleister (3) einheitlichen speziellen Finanzverwaltungssoftware (27) mit mehreren Bankfilialen/ Finanzdienstleistern (3) kommunizieren kann.

4. Verfahren zur Verwaltung von Finanzdienstleistungen zur Einbindung von Bankfilialen in Netzwerke nach Anspruch 1 bis Anspruch 3, dadurch gekennzeichnet,
daß die spezielle Finanzverwaltungssoftware (27) in eine graphische Oberfläche (28) integriert ist.

5. Verfahren zur Verwaltung von Finanzdienstleistungen zur Einbindung von Bankfilialen in Netzwerke nach Anspruch 1 bis Anspruch 4, dadurch gekennzeichnet,
daß mittels der Finanzverwaltungssoftware (27) auf verschiedenste Weise grafisch dargestellte Kontensymbole (29) und Bankfilial-/ Finanzdienstleistersymbole (31) der einzelnen Bankfiliale/ Finanzdienstleister (3) mit ihrem Äquivalent verknüpft werden.

6. Verfahren zur Verwaltung von Finanzdienstleistungen zur Einbindung von Bankfilialen in Netzwerke nach Anspruch 1 bis Anspruch 5, dadurch gekennzeichnet,
daß mittels der Finanzverwaltungssoftware (27) Geldbeträge mit Hilfe eines äquivalenten grafischen Geldsymbols (30) (z.B. Geldsack) auf verschiedene Konten und Finanzdienstleistungen bewegt werden können, wobei aus den Bewegungen (329) des Geldsymbols (30) auf eines der möglichen Aktivierungsflächen (33) Überweisungssätze entstehen, die der Nutzer (19) komplettiert, um diese dann optional an die entsprechende Bankfiliale/ Finanzdienstleister (3) zu versenden.

7. Verfahren zur Verwaltung von Finanzdienstleistungen zur Einbindung von Bankfilialen in Netzwerke nach Anspruch 1 bis Anspruch 6, dadurch gekennzeichnet,
daß innerhalb der Finanzverwaltungssoftware (27) die Art der Gestaltung des Geldsymbols (30) verschiedene Zustände der äquivalenten Geldmenge darstellt z.B.:
- mit voller Größe und Farbe: verfügbar
- farblich oder grafisch verändert: verschiedenartig festgelegt
- mit zusätzlichem Symbol: vorreserviert.

8. Verfahren zur Verwaltung von Finanzdienstleistungen zur Einbindung von Bankfilialen in Netzwerke nach Anspruch 1 bis Anspruch 3, dadurch gekennzeichnet,
daß die Finanzverwaltungssoftware (27) zusätzliche Online-Informationen (34) (z.B. News) der benutzten Bankfilialen/ Finanzdienstleistern (3) darstellt.

9. Verfahren zur Verwaltung von Finanzdienstleistungen zur Einbindung von Bankfilialen in Netzwerke nach Anspruch 1 bis Anspruch 3, dadurch gekennzeichnet,
daß die Finanzverwaltungssoftware (27) online updatefähig ist.
